# EUROPÄISCHE PATENTANMELDUNG

(11) **EP 0 607 620 A2**
(43) Veröffentlichungstag der Anmeldung: **27.07.1994**
(21) Anmeldenummer: 93121090.0
(22) Anmeldetag: 30.12.1993
(51) Int. Cl.: H01M 4/02, H01M 4/04, H01M 4/14, H01M 4/16

(54) **Elektrodenstruktur für eine bipolare Speicherbatterie**

(30) Priorität: 22.01.1993 CH 187/93
(71) Anmelder: ACCUMULATOREN-FABRIK OERLIKON, CH-8050 Zürich (CH)
(72) Erfinder: Giess, Herbert K., CH-8000 Zürich (CH); Frey, Andreas P., CH-5400 Baden (CH); Baerfuss, Andres, CH-8050 Zürich (CH)
(74) Vertreter: Troesch Scheidegger Werner AG

(57) **Zusammenfassung**

Eine Elektrodenstruktur für eine bipolare Speicherbatterie bzw. für einen Akkumulator für das Anordnen von aktivem Material umfasst eine leitende Elektrodenplatte (5), wenigstens teilweise bestehend aus einer Mischung aus einem elektrochemisch inerten und gegenüber den Elektrolyten weitgehendst beständigen Polymer als Matrix und einem leitenden, elektrochemisch inerten und gegenüber den Elektrolyten weitgehendst beständigen Füllstoff. Die leitende Elektrodenplatte (5) weist aussen herum eine nichtleitende Randpartie (3) auf, die aus einem weiteren elektrochemisch inerten und gegenüber den Elektrolyten weitgehendst beständigen Polymer besteht. Die Schmelzphase des weiteren Polymeres ist dabei weitgehendst mischbar mit der Schmelzphase des Polymeren, welches mit dem leitenden Füllstoff gemischt ist.

## Beschreibung

Die vorliegende Erfindung betrifft eine Elektrodenstruktur für eine bipolare Speicherbatterie bzw. für einen Akkumulator und für das Anordnen von aktivem Material, umfassend eine Elektrodenplatte, wenigstens teilweise bestehend aus einer Mischung aus einem chemisch inerten und gegenüber den Elektrolyten weitgehendst beständigen Polymer als Matrix und einem elektrisch leitenden, elektrochemisch inerten und gegenüber den Elektrolyten beständigen Füllstoff; eine Elektrodenstruktur ausgebildet als Elektrodenendplatte; ein elektrochemisches Speicherelement sowie eine Bleibatterie bzw. einen Bleiakkumulator mit mindestens einer Elektrodenstruktur; ein Verfahren zur Herstellung einer Elektrodenstruktur sowie ein Verfahren zur Herstellung einer Bleibatterie.

Ein bipolarer Akkumulator wird durch mehrere sogenannte Elektrodenstrukturen gebildet, welche das elektrochemisch aktive Material umfassen, wie beispielsweise im Falle einer Bleibatterie, Bleidioxid und metallisches Blei. Der das aktive Material haltende Träger bzw. die zwischen dem negativen und dem positiven Elektrodenmaterial angeordnete Elektrodenplatte nimmt am elektrochemischen Prozess nicht teil, muss aber ausreichende, elektrische Leitfähigkeit, gute mechanische Festigkeit und chemische Beständigkeit gegenüber Schwefelsäure aufweisen. Aufgrund dieser Anforderung an das eine Elektrodenplatte bildende Material schlägt beispielsweise die EP-A 0360 942 eine Bleibatterie mit Elektrodenstrukturen vor, wo Titanoxid der Formel TiOx als Trägermaterial für die Elektrodenplatte verwendet wird, mit Werten für X im Bereich von 1,55 - 1,95. Titanoxid hat sich als geeignet erwiesen, da es eines der wenigen leitfähigen Keramikmaterialien bzw. Metalloxide darstellt. Im weiteren erfüllt Titanoxid der obgenannten Formel die weiteren an ein Trägermaterial geforderten Anforderungen. Gemäss der genannten, europäischen Anmeldung wird TiOx aus Titandioxid durch Reduktion in einer nichtoxydierenden Atmosphäre bei einer Temperatur > 1000°C hergestellt. Dabei wird die Trägerplatte beispielsweise durch Extrusion von sogenanntem grünen Titandioxid in eine sogenannte "Honeycomb"-Struktur hergestellt und anschliessend erfolgt die Umwandlung durch "Verglasen" bzw. durch die obgenannte Reduktion in die stöchiometrische TiOx Form, wobei x = 1,55 - 1,95.

Analog beschreibt die US-PS 4 422 917 TiOx (x = 1,55 - 1,95) als Elektrodenmaterial für elektrochemische Vorgänge. Wiederum wird eine Elektrodenstruktur aus TiO₂ ("grünem TiO₂") und einem Bindemittel hergestellt, wie beispielsweise Ton, wobei der Ton beim "Verglasen" bzw. der Reduktion zu TiOx ausgebrannt wird.

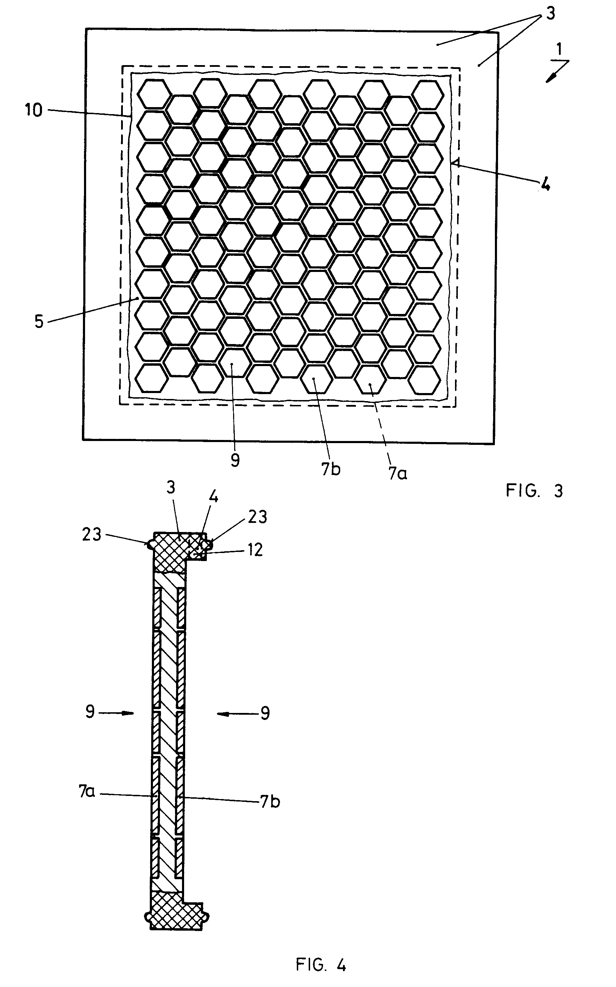

Da die Herstellung einer Elektrodenstruktur aus TiOx der obgenannten Art relativ teuer ist, was insbesondere durch den Verglasungs- bzw. Versinterungsprozess beeinflusst wird, schlägt nun die WO-91/06985 die Verwendung eines Elektrodenträgermaterials vor, in welchem leitende, anorganische Metalloxide in einer Kunststoffmatrix angeordnet bzw. verwendet werden. So wird beispielsweise ein Substrat für ein Elektrodenträgermaterial vorgeschlagen, bestehend aus einer sogenannten Kunststoffmatrix und leitendem Oxid, beispielsweise bestehend aus Polyäthylen, Polypropylen, und ähnlichem. Als Metalloxid wird wiederum TiOx vorgeschlagen, wobei für x ein Wert im Bereich von 1,76 - 1,86 vorgeschlagen wird. Wie insbesondere aus der Figur 4 erkennbar, besteht die Trägerstruktur vollständig aus dem leitfähigen Polymer/TiOx-Blend, und zwar auch im peripheren Bereich der Trägerstruktur, umgebend je das aktive Material beidseits der Elektrodenplatte.

Ein Problem, speziell bei dieser Anordnung, besteht nun darin, dass die Träger bzw. Elektrodenstrukturen nicht nur, wie erforderlich, zwischen dem aktiven Material leitend sind, sondern auch entlang der Peripherie, was unerwünscht ist. Aufgrund dieser Ausgestaltung muss die Trägerstruktur aussen herum zusätzlich isoliert werden. Zwar ist es möglich diese periphere Randpartie aus einem nichtleitenden Material herzustellen, wobei aber dann das Problem bei den Uebergängen zwischen dem leitenden und nichtleitenden Material auftritt, dass aufgrund der hohen, mechanischen und chemischen Belastung durch den Schwefelsäure-Elektrolyten Risse entstehen können, womit Leckagen zwischen den einzelnen Zellen auftreten. Auch ist das Herstellen einer Trägerstruktur, umfassend ein leitendes und ein nichtleitendes Material relativ aufwendig.

Die Aufgabe der vorliegenden Erfindung besteht deshalb darin, eine geeignete, bipolare Elektrodenstruktur bzw. eine Trägerstruktur zu schaffen, die einerseits zwischen den aktiven Materialien gut leitend ist, Schwefelsäure beständig ist und gute mechanische Festigkeit aufweist, und die billig und einfach in der Herstellung ist. Im weiteren soll die erfindungsgemässe Trägerstruktur die oben angeführten Nachteile nicht aufweisen.

Erfindungsgemäss wird diese Aufgabe mittels einer Elektrodenstruktur gemäss dem Wortlaut nach Anspruch 1 gelöst.

Vorgeschlagen wird eine Elektrodenstruktur für eine bipolare Speicherbatterie bzw. einen Akkumulator für das Anordnen von aktivem Material, umfassend eine Elektrodenplatte, wenigstens teilweise bestehend aus einer Mischung aus einem elektrochemisch inerten und gegenüber den Elektrolyten, wie Schwefelsäure, weitgehendst beständigen Polymer als Matrix und einem elektrisch leitenden, elektrochemisch inerten und gegenüber den Elektrolyten, wie Schwefelsäure, weitgehendst beständigen Füllstoff, wie beispielsweise in der WO 91/06985 vorgeschlagen, welche dadurch gekennzeichnet ist, dass die leitende Elektrodenplatte aussen herum, insbesondere das aktive Material umgebend, eine nichtleitende Randpartie aufweist. Diese nichtleitende Randpartie besteht aus einem weiteren elektrochemisch inerten und gegenüber den Elektrolyten, wie Schwefelsäure, weitgehendst beständigen Polymer, dessen Schmelzphase wenigstens weitgehendst mischbar ist mit der Schmelzphase des Polymeren, welches mit dem leitenden Füllstoff gemischt ist, und die leitende Elektrodenplatte bildet.

Diese, die Elektrodenplatte allseitig einschliessende, Randpartie ist vorzugsweise wenigstens an einer Seitenfläche der Platte über die Oberfläche des aktiven Materials hinaus vorstehend ausgebildet.

Erfindungsgemäss wird im weiteren vorgeschlagen, dass das weitere Polymer, aus welchem die Randpartie gebildet wird, und das mit dem Füllstoff gemischte Polymer der leitenden Elektrodenplatte weitgehendst identisch sind, wobei vorzugsweise ein Polyolefin vorliegt.

Als leitender Füllstoff wird vorzugsweise ein leitendes, keramisches Material bzw. ein leitendes Metalloxid, wie beispielsweise TiOx vorgeschlagen, mit x in einem Wertbereich von 1,55 - 1,95. Als Polyolefin wird erfindungsgemäss die Verwendung von Polypropylen oder von Polyäthylen vorgeschlagen.

Weitere bevorzugte Ausführungsvarianten einer erfindungsgemässen Elektrodenstruktur werden in den abhängigen Ansprüchen 5 oder 6 charakterisiert. Dabei wird in einer bevorzugten Ausführungsvariante vorgeschlagen, die leitende Elektrodenplatte weiter mit zusätzlichen, leitenden Füllstoffen zu versehen, wie beispielsweise mit Kohlenstoff.

Die erfindungsgemäss vorgeschlagene Elektrodenstruktur eignet sich insbesondere auch für das Ausbilden von Endelektrodenstrukturen für die Verwendung in einer Bleibatterie bzw. einem Bleiakkumulator, wobei die leitende Elektrodenplatte nur an einer Seite aktives Material umfasst und auf der anderen Seite mit nichtleitendem Polymer überdeckt ist, das vorzugsweise identisch ist mit dem weiteren Polymer, das verwendet wird für die Bildung der nichtleitenden Randpartie. In der leitenden Zone der Endelektrodenplatte ist ein flächiger, leitender Stromabnehmer vollständig eingehüllt durch die leitende Mischung von Polymer mit leitendem Füllstoff angeordnet, der mit mindestens einem leitenden Stromabnehmer, welcher durch die nichtleitende Ueberdeckung der Platte hindurch aus dieser herausragt, verbunden ist, um einen Anschlusspol der Batterie bzw. des Akkumulators zu bilden.

Bei diesem flächigen Stromabnehmer kann es sich um ein gitter- oder lochblechartiges Metall handeln.

Weiter wird erfindungsgemäss eine Bleibatterie bzw. ein Bleiakkumulator vorgeschlagen, mit einer oder mehrerer erfindungsgemäss definierter Elektrodenstrukturen, wobei die einzelnen Elektrodenplatten zur Bildung im wesentlichen geschlossener Zellen, beinhaltend den Schwefelsäure-Elektrolyten, mit ihren Randpartien dichtend aneinanderstossend angeordnet sind.

Weiter wird vorgeschlagen, dass die erfindungsgemässe Bleibatterie zwei Elektrodenendstrukturen bzw. -endplatten umfasst, wie oben erfindungsgemäss charakterisiert bzw. vorgeschlagen.

Der grosse Vorteil des vorgeschlagenen Bleiakkumulators, umfassend die erfindungsgemäss definierten Elektrodenstrukturen, liegt einerseits in der einfachen Herstellung, indem der Trägerkörper auf einfachste Art und Weise mittels einer in der Kunststofftechnik bestens bekannten Spritzgussmaschine hergestellt werden kann, und zwar sowohl für die notwendige leitende Zone zwischen den beiden aktiven Materialien, wie auch praktisch gleichzeitig für die, diese Zone umgebende, nichtleitende Randpartie. Dabei kommt die in der Kunststofftechnik bestens bekannte Zweikomponenten-Spritztechnik zum Zuge, da das Material der leitenden Zone, wie auch das Material der nichtleitenden Zone bestens miteinander kompatibel sind, indem das für die nichtleitende Randpartie verwendete Polymer und das in der leitenden Zone die Matrix bildende Polymer entweder in der Schmelze gut mischbar sind, oder sogar vorzugsweise identisch sind. Die vorzugsweise vorgeschlagenen Polyolefine, wie Polypropylen und Polyäthylen sind sogenannte Massenkunststoffe, die einfach in der Verarbeitung und sehr billig in der Beschaffung sind. Damit entfällt einerseits der im Stand der Technik vorgeschlagene, teure Sinterungsvorgang bei der ausschliesslichen Verwendung des keramischen Metalloxid-Materials, und zudem kann auf das Anordnen einer die leitende Zone umgebende, nichtleitende Randzone und damit auf einen weiteren Bearbeitungs- bzw. Herstellungsprozess verzichtet werden. Ein weiterer Vorteil der vorgeschlagenen Bleibatterie liegt darin, dass durch das Vorstehen der nichtleitenden Randpartie über das aktive Material hinaus mehrere Elektrodenstrukturen ohne die Notwendigkeit irgendwelcher Zwischenelemente oder Dichtungsringe aneinander gefügt werden können, um so die zwischen den aktiven Materialien notwendigen, nach aussen dichten Elektrolyt-Zellen zu bilden, die nur über sogenannte Elektrolyt-Oeffnungen bzw. durch Ueberdruckventile nach aussen kommunizierend verbunden sind. Mit Elektrodenstrukturen, beispielsweise vorgeschlagen in der WO 91/06985 ist ein einfaches Aneinanderreihen mehrerer Elektrodenstrukturen zur Bildung der einzelnen Zellen ohne zusätzliche Zwischenelemente zwischen den Strukturen nicht möglich.

Wiederum ein weiterer Vorteil besteht darin, dass durch das erwähnte Anordnen der peripheren, nichtleitenden Randpartie der Elektrodenstrukturen und der beiden vorgeschlagenen nach aussen isolierten Elektrodenendplatten gänzlich auf eine zusätzliche, isolierende Einhüllung der Batterie bzw. der Zellen verzichtet werden kann.

Weiter vorgeschlagen wird ein Verfahren zur Herstellung einer Elektrodenstruktur gemäss dem Wortlaut nach Anspruch 12. Wie bereits oben erwähnt, kann die Elektrodenträgerstruktur bzw. die Elektrodenendplatte mittels Zweikomponenten-Spritztechnik hergestellt werden, durch praktisch gleichzeitiges Spritzen einer Mischung, bestehend aus einem Schwefelsäure-beständigen Polymer und mindestens einem leitenden Schwefelsäure beständigen Füllstoff, zusammen mit einem nichtleitenden Schwefelsäure-beständigen Polymer für die Bildung der leitenden und nichtleitenden Zonen bzw. Partien der Platte. Dabei ist die Schmelzphase des weiteren Polymers mit der Schmelzphase des Polymeren, welches mit dem Füllstoff gemischt wird, wenigstens weitgehendst mischbar.

Vorzugsweise wird im wesentlichen Polypropylen oder Polyäthylen zusammen mit einer Mischung aus Polypropylen bzw. Polyäthylen und TiOx (wobei x = 1,75 - 1,85 ist) unter Verwendung der genannten Zweikomponenten-Spritztechnik für die Herstellung einer Elektrodenplatte bzw. Trägerstruktur verarbeitet, wobei mindestens auf einer Seite der leitenden Plattenzone vorzugsweise eine wabenartige Struktur ausgebildet wird für die Aufnahme des aktiven Materials. Die das aktive Material umgebende, nichtleitende Randpartie und gegebenenfalls im Falle einer Endelektrodenstruktur die, die andere Seite der leitenden Platte überdeckende, nichtleitende Zone werden aus im wesentlichen Polypropylen bzw. Polyäthylen gefertigt.

Für das Herstellen einer Bleibatterie bzw. eines Bleiakkumulatoren mittels den erfindungsgemäss definierten Elektrodenstrukturen bzw. den Elektrodenendplatten wird vorgeschlagen, je zwei Elektrodenstrukturen entlang ihrer nichtleitenden Randpartien dicht aneinanderstossend anzuordnen, was beispielsweise mittels Spiegelschweissen zur Bildung der einzelnen Zellen erfolgen kann. Anschliessend kann die Elektrolyt-Lösung, beispielsweise über vorhandene Elektrolyt-Oeffnungen bzw. Gasöffnungen der Ueberdruckventile eingefüllt werden.

Die oben erwähnten, und erfindungsgemäss vorgeschlagenen Elektrodenstrukturen bzw. Endplatten eignen sich wie erwähnt, insbesondere für die Verwendung in Bleibatterien bzw. Bleiakkumulatoren. Allerdings können sie für die Herstellung von Zellen in irgendwelchen elektrochemischen Speichersystemen verwendet werden. Wesentlich dabei ist, dass das für die Herstellung sowohl der leitenden als auch der nichtleitenden Zone verwendete Polymer und Leitfähigkeitszusätze gegenüber der in dieser Batterie verwendeten Elektrolyt-Lösung chemisch und elektrochemisch inert ist.

Die Erfindung wird nun anschliessend beispielsweise und unter Bezug auf die beigefügten Figuren näher erläutert. Dabei zeigen:
- Fig. 1: in Perspektive eine erfindungsgemässe Elektrodenstruktur,
- Fig. 2: die Elektrodenstruktur von Fig. 1 im Querschnitt,
- Fig. 3: die Elektrodenstruktur von Fig. 1 in Vorderdraufsicht,
- Fig. 4: eine weitere erfindungsgemässe Ausgestaltung einer Elektrodenstruktur im Querschnitt,
- Fig. 5: mehrere Elektrodenstrukturen gemäss Fig. 1 aneinandergereiht und im Querschnitt zur Bildung von einzelnen Batterie-Zellen,
- Fig. 5a: ein Ueberdruckventil aus Fig. 5 in Vergrösserung,
- Fig. 6: eine Elektrodenendplatte im Querschnitt, und
- Fig. 7: schematisch dargestellt der Herstellprozess einer einzelnen Batterie-Zelle durch Aneinanderfügen zweier Elektrodenstrukturen gemäss Fig. 1 im Querschnitt.

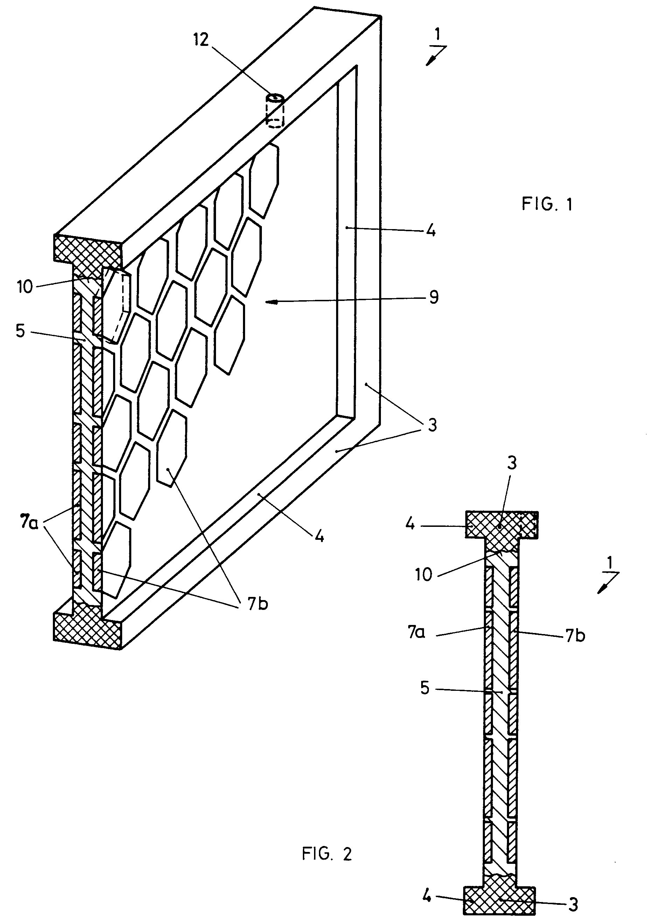

Fig. 1 zeigt eine erfindungsgemässe Elektrodenstruktur 1 in Perspektive, umfassend die Trägerstruktur, bestehend aus der mittig angeordneten, leitenden bipolaren Elektrodenplatte 5 und der diese leitende Elektrodenplatte kragenartig umgebenden nichtleitenden Randpartie 3. Beidseits der leitenden Elektrodenplatte 5 sind in Wabenstrukturen 9 die aktiven Materialien 7a bzw. 7b aufgetragen, die beispielsweise in Pastenform in die einzelnen Waben der Wabenstrukturen 9 eingelassen angeordnet sein können.

Wie insbesondere aus Fig. 2, welche die Elektrodenstruktur gemäss Fig. 1 im Querschnitt darstellt, deutlich hervorgeht, weist die nichtleitende Randpartie 3 jeweils einen das aktive Material überragenden Abschnitt 4 auf, womit die Elektrodenstruktur 1 auf beiden Seiten je einen vorstehenden Randabschnitt 4 aufweist, der je die Elektrode, beinhaltend das leitende und das aktive Material vollständig umgibt. Dabei ist nachzutragen, dass Fig. 1 selbstverständlich frontseitig ebenfalls eine nichtleitende Randpartie 3 aufweist, die aufgrund der aufgeschnittenen, perspektivischen Darstellungen der Elektrodenstruktur nicht dargestellt ist, bzw. entfernt worden ist. Dies ergibt sich aus der vorder- bzw. frontseitigen Darstellung der Elektrodenstruktur gemäss Fig. 1, dargestellt in Fig. 3. Somit bildet dieser vorstehende Randabschnitt 4 allseitig umgebend eine viereckige wie quadratische oder rechteckige kragenartige Struktur.

Bei der Herstellung von Elektrodenstrukturen, wie in Fig. 1 bis 3 dargestellt, umfassend eine leitende und eine nichtleitende Zone hat sich im Stand der Technik die Grenzfläche 10 zwischen den beiden Zonen als kritisch erwiesen, da sich an dieser Stelle aufgrund mechanischer und chemischer Beanspruchung Risse einstellten, was zu Leckagen zwischen den einzelnen Zellen geführt hat. Zur Herstellung der Trägerstruktur, umfassend die leitende und nichtleitende Zone, werden Materialien vorgeschlagen, deren Schmelze gut mischbar sind, womit dieses Problem auf einfache und elegante Art und Weise gelöst werden kann. So wird nun beispielsweise die nichtleitende Randpartie aus Polypropylen oder Polyäthylen hergestellt, währenddem die leitende Elektrodenplatte 5 eine Mischung umfasst, bestehend aus Polypropylen bzw. Polyäthylen, gefüllt mit einem leitenden Füllstoff, wie einem leitenden Metalloxid und ggf. Kohlenstoffpulver, wobei erfindungsgemäss vorzugsweise Titanoxid der Formel TiOx verwendet wird mit einem Wert für x zwischen 1,55 - 1,95, vorzugsweise 1,75 - 1,85. Durch die Verwendung dieser herkömmlichen und leicht zu verarbeitenden Massekunststoffe, wie Polypropylen oder Polyäthylen, kann die Trägerstruktur mittels Zweikomponenten-Spritztechnik auf einfachste Art und Weise hergestellt werden, wobei durch die Verwendung desselben Kunststoffes keine eigentliche Grenzfläche zwischen den beiden Zonen entsteht.

Für den leitenden Bereich eignet sich beispielsweise eine Mischung von Polypropylen mit Titanoxid der Formel TiOx mit einem Wert für x = 1,75 - 1,85, wobei vorzugsweise ein Titanoxid eingesetzt wird mit einer Kornagglomeratgrösse von 20 - 150 Mikron, vorzugsweise 50 - 70 Mikron. Die Konzentration von Titanoxid in der Mischung beträgt 40 - 80 Gew.%, wobei im Falle, dass keine weiteren Füllstoffe bzw. Additive zugesetzt werden, vorzugsweise zwischen 65 und 80 Gew.% Titanoxid eingesetzt werden. Zusätzlich ist es möglich der Mischung Kohlenstoff beizufügen und zwar in der Grössenordnung von 1 - 20 Gew.%, wobei in diesem Fall der Anteil Titanoxid bevorzugt im Bereich von 40 - 65 Gew.% zu wählen ist. Die Restmenge wird jeweils durch das Polyolefin, wie beispielsweise Polyproylen oder Polyäthylen gewählt. Je nach verwendeter Mischung für die Herstellung der leitenden Zone ergeben sich Volumenwiderstände im Bereich von 0,7 - 1,9 Ohm.cm. Vorzugsweise wird somit eine Formulierung für die Mischung gewählt, welche einen Volumenwiderstand von ca. 1 Ohm.cm ergibt.

Selbstverständlich ist es auch möglich weitere Füllstoffe, wie beispielsweise Farbstoffe der Mischung beizumengen, wobei jedoch immer darauf zu achten ist, dass die Säurebeständigkeit und die Leitfähigkeit erhalten bleiben. Dasselbe gilt im übrigen auch für die nichtleitende Randpartie, wo das Polyolefin, wie beispielsweise das Polypropylen ebenfalls mit Füllstoffen gemischt werden kann, sei dies zum Einfärben des Kunststoffes oder um erhöhte mechanische Festigkeit zu erzielen.

Fig. 4 zeigt analog zu Fig. 2 eine weitere Ausführungsvariante einer Elektrodenstruktur im Querschnitt, wobei der Unterschied zu Fig. 2 darin besteht, dass die nichtleitende Randpartie 3 nur einen einseitig vorstehenden kragenartigen Randabschnitt 4 aufweist. Die übrigen Bestandteile der Elektrodenstruktur sind analog derjenigen der Fig. 1 bis 3 und sind entsprechend mit denselben Referenzzahlen versehen. Auf eine weitere Erläuterung dieser Bestandteile wird verzichtet. Der Vorteil der Elektrodenstruktur gemäss Fig. 4 liegt darin, dass bei der Herstellung einer Batterie die Gefahr des verkehrten Anordnens einer Elektrodenstruktur verringert wird, da immer ein vorstehender Randabschnitt gegen eine "flache" Oberfläche der nächsten Elektrodenstruktur anzuordnen ist.

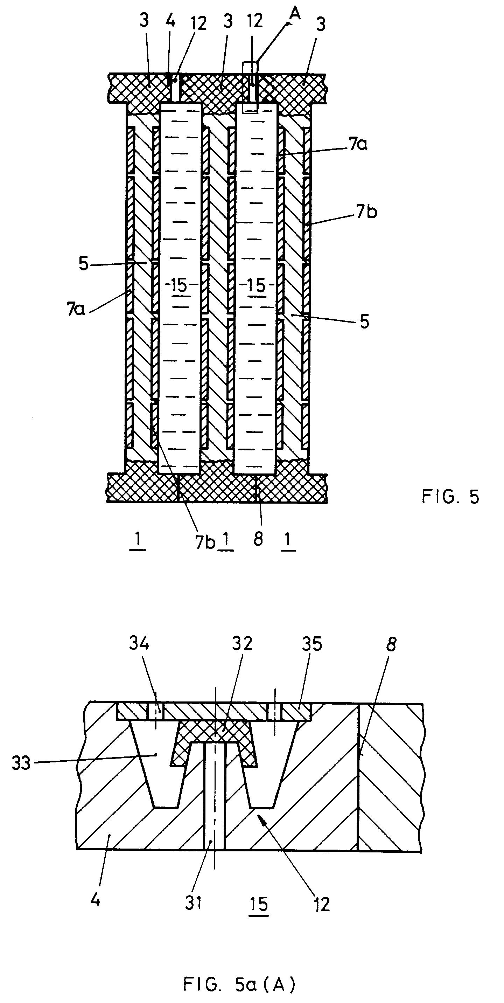

Fig. 5 zeigt eine Batterieanordnung bzw. mehrere Zellen einer Batterie, umfassend mehrere Elektrodenstrukturen gemäss Fig. 2 im Querschnitt. Durch das Aneinanderfügen mehrerer Elektrodenstrukturen 1 bilden sich zwischen diesen Strukturen sogenannte Elektrolytzellräume 15, in welche beispielsweise der Schwefelsäure haltige Elektrolyt anzuordnen ist. In diesen Zellräumen kann sich auch ein sogenannter Separator oder ein Glasfaserpapier befinden. Wesentlich dabei ist, dass die einzelnen Elektrodenstrukturen dicht aneinanderstossen, damit keine Elektrolytflüssigkeit aus den Zellräumen 15 entweichen kann. Wichtig ist natürlich auch, dass jede Zelle beidseits der Elektrolytflüssigkeit entgegengesetzt, aktives Material umfasst, wie beispielsweise im Falle einer Bleibatterie, Bleidioxid und metallisches Blei. Da die für die Herstellung einer Bleibatterie zu verwendenden, pastenartigen Materialmassen, umfassend Bleidioxid, metallisches Blei und Zusatzstoffe aus dem Stand der Technik bestens bekannt sind, wird auf deren Würdigung an dieser Stelle verzichtet. Im Innern der einzelnen Elektrolytzellräumen 15 kann beispielsweise saugfähiges Glasfaserpapier angeordnet werden, das mit Schwefelsäure getränkt ist. Die Schwefelsäure kann auch als gelierte Schwefelsäure vorhanden sein. Die Schwefelsäure kann dabei durch Elektrolytöffnungen bzw. Gasöffnungen 12 nach dem dichtenden Aneinanderfügen der Elektrodenstrukturen eingefüllt werden. Diese Elektrolytöffnung 12 dient gleichzeitig als Gasexpansionsöffnung und/oder Ueberdruckventil während dem Betreiben der Bleibatterie und ist vergrössert in Fig. 5a dargestellt. Beim Vorherrschen eines Ueberdruckes im Zellraum 15 gelangen Ueberdruckgase durch einen Durchgang 31 zu einer darauf dichtend angeordneten Dichtung 32, welche bei einem gewissen Ueberdruck vom Durchgang 31 abgehoben wird. Damit können Ueberdruckgase in die Ventilkammer 33 gelangen und aus dieser durch Oeffnungen 34, welche in einem Ventildeckel 35 angeordnet sind, entweichen. Sobald der Ueberdruck im Zellraum 15 einen gewissen Wert unterschreitet, liegt die Dichtung 32 dicht auf dem Durchgang 31 auf.

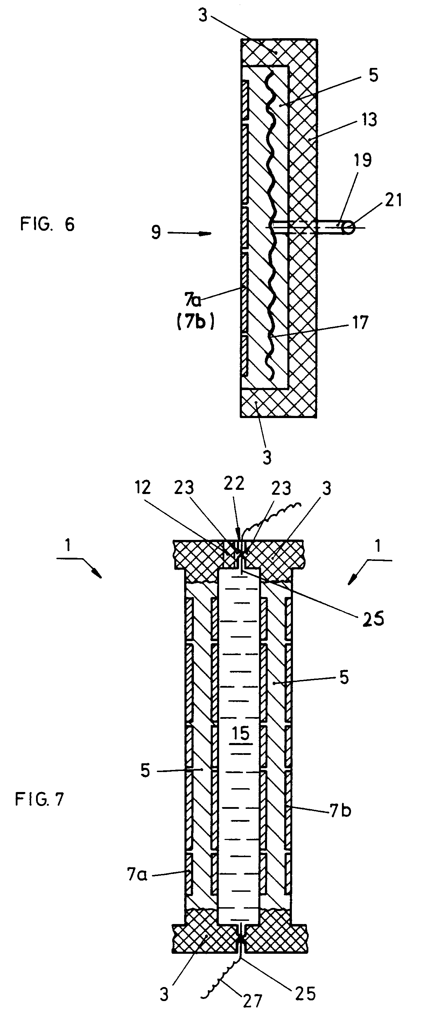

In Fig. 6 ist ebenfalls im Querschnitt eine Elektrodenendplatte 11 dargestellt, wiederum primär umfassend die Elektrodenplatte 5, hergestellt aus der leitenden Polymer/TiOx-Mischung, oder aus ähnlichen wie oben beschriebenen, leitenden Mischungen. Diese leitende Platte 5 wird nun nicht nur aussen herum durch eine nichtleitende Randpartie 3 überdeckt, sondern auch entlang einer Seitenzone 13. Je nach dem, um welchen Pol es sich dabei handelt, ist die leitende Platte 5 auf der gegenüberliegenden Seite mit aktivem Material 7a oder 7b in der wabenartigen Struktur 9 versehen.

Um die in der Batterie aufgebaute Spannung bzw. den Strom nach aussen zu übertragen ist in der leitenden Platte 5 ein leitendes, flächiges Metallelement 17 angeordnet, wie beispielsweise ein Gitter oder ein Lochblech. Dieses leitende Element bzw. dieser sogenannte flächige Stromabnehmer 17 ist leitend mit einem weiteren Stromabnehmer 19 verbunden, der durch die nichtleitende Ueberdeckung 13 hindurchgeführt ist, um den Pol-Anschluss 21 zu bilden.

Wiederum kann die Elektrodenendplatte 11 in einem Spritzvorgang hergestellt werden, indem gleichzeitig das leitende und das nichtleitende Material mittels Zweikomponenten-Spritztechnik verarbeitet werden und gleichzeitig werden während dem Spritzvorgang der flächige Stromabnehmer 17 und der stiftartige Stromabnehmer 19 in die Spritzgussform eingelegt. Mit Ausnahme des poligen Anschlusses 21 ist die in Fig. 6 dargestellte Elektrodenendplatte 11 wiederum vollständig durch die nichtleitende Masse nach aussen isoliert. Für die Herstellung einer Bleibatterie sind somit auf die in Fig. 5 dargestellte Anordnung auf beiden Seiten je eine Endplatte gemäss Fig. 6 anzuordnen, wobei selbstverständlich die beiden Endplatten unterschiedliche Polarität aufzuweisen haben. Je nach verwendeter Elektrodenstruktur nach Fig. 2 oder nach Fig. 4 kann die Endplatte gemäss Fig.6 aussen herum zusätzlich einen vorstehenden Randabschnitt bzw. Kragen aufweisen. Auch ist es möglich die eine Endplatte mit einem Randabschnitt zu versehen, währenddem die andere Endplatte keinen derartigen Abschnitt aufweist.

In Fig. 7 schlussendlich ist schematisch und im Querschnitt die Herstellung eines nach aussen dichten Elektrolytzellraumes 15 bzw. das dichtende Aneinanderfügen von zwei Elektrodenstrukturen 1 dargestellt. Je stirnseitig an den vorstehenden Randabschnitten 4 können Vorsprünge 23 angeordnet sein, welche sich um die ganze Struktur herum erstreckend längsausgebildet sind. Dabei ist wesentlich, dass je die beiden wulstartigen Vorsprünge 23 der beiden Elektrodenstrukturen 1 weitgehendst aufeinanderpassen. Beim Aneinanderfügen der zwei Elektrodenstrukturen 1 wird zusätzlich im Spalt 22 beispielsweise ein Schweissspiegel 25 angeordnet, welcher über eine elektrische Quelle 27 erhitzt wird. Durch das Erhitzen dieses Spiegels 25 werden die beiden Wülste 23 entlang des ganzen Umfanges der Elektrodenstrukturen 1 erhitzt und aufgeschmolzen, worauf der Spiegel 25 nach aussen in Pfeilrichtung entfernt wird. Mittels diesem sogenannten Spiegelschweissen können somit zwei Elektrodenstrukturen dicht aneinandergefügt werden, ohne dass irgendwelche Hilfsmittel wie Haftvermittler, Kleber oder mechanische Verbindungsmittel notwendig sind. In diesen so dicht abgeschlossenen Elektrolytinnenraum 15 kann über die Elektrolytöffnung 12 die Elektrolytflüssigkeit eingefüllt werden. Durch das Aneinanderfügen mehrerer Elektrodenstrukturen 1 und das Anordnen der beiden endständigen Endplatten 11 wird auf diese Art und Weise ein bipolarer Akkumulator hergestellt, wie beispielsweise eine Bleibatterie.

Bei den in den Fig. 1 bis 7 dargestellten Elektrodenstrukturen bzw. Anordnungen handelt es sich um Beispiele, die in x-beliebiger Art und Weise ergänzt, erweitert oder abgeändert werden können. Insbesondere bei der Wahl der Materialien für die Herstellung der Trägerstrukturen ist es möglich unterschiedliche Polymere zu verwenden, wesentlich dabei ist, dass das verwendete Polymer säurebeständig ist, gute mechanische Eigenschaften aufweist, gut füllbar ist und auf herkömmlichen Spritzgussmaschinen leicht zu verarbeiten ist. Auch ist es nicht notwendig für die nichtleitende Randpartie und die leitende Elektrodenplatte dasselbe Polymer zu verwenden, wichtig ist dabei nur, dass die beiden Polymere in der Schmelze gut mischbar sind und nicht zwei Phasen bilden. Auch die geometrische Ausgestaltung der Elektrodenstrukturen kann auf vielfältigste Art und Weise abgeändert werden, so handelt es sich beispielsweise bei der in Fig. 1 dargestellten Wabenstruktur nur um eine beispielsweise gewählte Struktur, die sich im Stand der Technik bewährt hat. Es können aber auch andere Strukturen für das Anbringen des aktiven Materials verwendet werden, oder aber es kann vollständig auf eine Struktur verzichtet werden. Auch die Wahl des aktiven Materials ist nicht Gegenstand der vorliegenden Erfindung, weshalb die verschiedensten für Batterien gebräuchlichen Materialien Verwendung finden können.

Ein wesentlicher, erfindungsgemässer Aspekt ist, dass für die Herstellung der Trägerstruktur ein leitendes und ein nichtleitendes Mateial verwendet werden, welche in der Schmelze weitgehendst mischbar sind und vorzugsweise mittels sogenannter Zweikomponenten-Spritztechnik verarbeitbar sind.

Ein weiterer, erfindungswesentlicher Aspekt besteht darin, dass die Trägerstruktur peripher auf einer Seite oder auf beiden Seiten eine vorstehende, nichtleitende Randpartie aufweist, womit mehrere Strukturen ohne die Notwendigkeit zusätzlicher Elemente zur Bildung der einzelnen Zellen einer Batterie aneinandergefügt werden können.

Schlussendlich ein weiterer, erfindungswesentlicher Aspekt besteht in der Ausgestaltung der Endplatten, wo in die leitende Zone der Trägerstruktur ein flächiger Stromabnehmer eingebaut wird, welcher über einen Anschluss nach aussen leitend verbunden ist.

## Patentansprüche

1. Elektrodenstruktur für eine bipolare Speicherbatterie bzw. für einen Akkumulator, für das Anordnen von aktivem Material, umfassend eine leitende Elektrodenplatte (5), wenigstens teilweise bestehend aus einer Mischung aus einem elektrochemisch inerten und gegenüber den Elektrolyten weitgehendst beständigen Polymer als Matrix und einem elektrisch leitenden, elektrochemisch inerten und gegenüber den Elektrolyten weitgehendst beständigen Füllstoff, dadurch gekennzeichnet, dass die leitende Elektrodenplatte (5) aussen herum eine nichtleitende Randpartie (3) aufweist, bestehend aus einem weiteren, elektrochemisch inerten und gegenüber den Elektrolyten weitgehendst beständigen Polymer, dessen Schmelzphase wenigstens weitgehendst mischbar ist mit der Schmelzphase des Polymeren, welches mit dem leitenden Füllstoff gemischt ist.

2. Elektrodenstruktur, vorzugsweise nach mindestens einem der Ansprüche, wie nach Anspruch 1, dadurch gekennzeichnet, dass die Randpartie (3) wenigstens auf einer Seitenfläche der Platte (5) über die Oberfläche beinhaltend das aktive Material (7a, 7a) kragenartig vorstehend ausgebildet ist.

3. Elektrodenstruktur, vorzugsweise nach mindestens einem der Ansprüche, wie nach einem der Ansprüche 1 oder 2, dadurch gekennzeichnet, dass das weitere Polymer und das mit dem Füllstoff gemischte Polymere weitgehendst identisch sind, wobei vorzugsweise ein Polyolefin vorliegt.

4. Elektrodenstruktur, vorzugsweise nach mindestens einem der Ansprüche, wie nach einem der Ansprüche 1 bis 3, dadurch gekennzeichnet, dass als Polymer bzw. als weiteres Polymer ein Polyolefin, wie Polypropylen oder Polyäthylen vorliegt, und dass der leitende Füllstoff Titanoxid der Formel TiOx ist, mit einem Wert für x im Bereich zwischen 1,55 - 1,95.

5. Elektrodenstruktur, vorzugsweise nach mindestens einem der Ansprüche, wie nach einem der Ansprüche 1 bis 4, gekennzeichnet durch die Elektrodenplatte (5), bestehend aus einer Mischung aus Polyäthylen oder Polypropylen und TiOx mit einem Wert für x im Bereich zwischen 1,75 und 1,85, wie insbesondere Ti₄0₇ und Ti₅ O₉, mit einer Kornagglomeratgrösse von > 20 Mikron, vorzugsweise 50 - 70 Mikron, und den die Platte (5) allseitig einfassenden Rand (3) im wesentlichen bestehend aus nichtleitendem Polyäthylen oder Polypropylen.

6. Elektrodenstruktur, vorzugsweise nach mindestens einem der Ansprüche, wie nach einem der Ansprüche 1 bis 5, dadurch gekennzeichnet, dass die Elektrodenplatte (5) 40 - 80 Gew.% TiOx, vorzugsweise ca. 65 Gew.%, ggf. 1 - 20 Gew.% Kohlenstoff, vorzugsweise ca. 6 Gew.% und den Rest Polyäthylen oder Polypropylen umfasst.

7. Elektrodenstruktur, vorzugsweise nach mindestens einem der Ansprüche, wie nach einem der Ansprüche 1 bis 6, bildend eine Elektrodenendplatte für einen Akkumulator, dadurch gekennzeichnet, dass die leitende Elektrodenplatte (5) nur an einer Seite aktives Material (7a oder 7b) umfasst, und auf der anderen Seite mit nichtleitendem Polymer überdeckt ist, welches Polymer vorzugsweise identisch ist mit dem weiteren Polymer, verwendet für die Bildung der nichtleitenden Randpartie (3), und dass in der leitenden Zone (5) der Endplatte (11) ein flächiger, leitender Stromabnehmer (17) vollständig eingehüllt durch die leitende Mischung von Polymer mit leitendem Füllstoff angeordnet ist, der mit mindestens einem leitenden Stromabnehmer (19), welcher durch die nichtleitende Ueberdeckung (13) der Platte (11) hindurch aus dieser herausragt, verbunden ist, um einen Anschlusspol (21) einer Batterie bzw. eines Akkumulators zu bilden.

8. Elektrodenstruktur, vorzugsweise nach mindestens einem der Ansprüche, wie nach Anspruch 7, dadurch gekennzeichnet, dass der flächige Stromabnehmer (17) gitter- oder lochblechartig ausgebildet ist.

9. Elektrochemisches Speicherelement mit mindestens einer Elektrodenstruktur nach einem der Ansprüche 1 bis 6, dadurch gekennzeichnet, dass die einzelnen Plattenstrukturen (1) zur Bildung im wesentlichen geschlossener Zellen (15) beinhaltend den Elektrolyten mit ihren Randpartien (4) dichtend aneinanderstossend angeordnet sind.

10. Elektrochemisches Speicherelement, dadurch gekennzeichnet, dass zwei Endplatten nach einem der Ansprüche 7 oder 8 vorgesehen sind, zur Bildung der beiden Endpole.

11. Bleibatterie bzw. Bleiakkumulator mit mindestens einer Elektrodenstruktur nach einem der Ansprüche 1 bis 6, dadurch gekennzeichnet, dass die einzelnen Plattenstrukturen (1) zur Bildung im wesentlichen geschlossener Zellen (15), beinhaltend den Schwefelsäure-Elektrolyten, mit ihren Randpartien (4) dichtend aneinander stossend angeordnet sind.

12. Bleibatterie, dadurch gekennzeichnet, dass zwei Endplatten nach einem der Ansprüche 7 oder 8 vorgesehen sind, zur Bildung der beiden End-Pole.

13. Verfahren zur Herstellung einer Elektrodenstruktur, vorzugsweise nach einem der Ansprüche 1 bis 8, dadurch gekennzeichnet, dass die Elektrodenplatte mittels Zweikomponenten-Spritztechnik hergestellt wird, durch praktisch gleichzeitiges Spritzen einer Mischung, bestehend aus einem elektrochemisch inerten und gegenüber den Elektrolyten weitgehendst beständigen Polymer und mindestens einem leitenden, elektrochemisch inerten und gegenüber den Elektrolyten weitgehendst beständigen Füllstoff zusammen mit einem nichtleitenden, elektrochemisch inerten und gegenüber den Elektrolyten weitgehendst beständigen weiteren Polymer für die Bildung der leitenden und nichtleitenden Zonen der Struktur bzw. Platte (1, 11), wobei die Schmelzphase des weiteren Polymers mit der Schmelzphase des Polymeren, welches mit dem Füllstoff gemischt ist, wenigstens weitgehendst mischbar ist.

14. Verfahren, vorzugsweise nach mindestens einem der Ansprüche, wie nach Anspruch 13, dadurch gekennzeichnet, dass im wesentlichen Polypropylen oder Polyähtylen zusammen mit einer Mischung aus Polypropylen bzw. Polyäthylen und TiOx (x = 1,75 - 1,85) unter Verwendung von Zweikomponenten-Spritztechnik für die Herstellung einer Elektrodenstruktur bzw. Trägerplatte verarbeitet werden, wobei mindestens auf einer Seite der leitenden Plattenzone (5) eine wabenartige Struktur ausgebildet wird für die Aufnahme des aktiven Materials, und dass die das aktive Material umgebende, nichtleitende Randpartie (3) und gegebenenfalls im Falle von Elektrodenendplatten die, die andere Seite der leitenden Platte überdeckende, nichtleitende Zone (13) aus im wesentlichen Polypropylen bzw. Polyäthylen gefertigt werden.

15. Verfahren zur Herstellung einer Bleibatterie bzw. eines Bleiakkumulatoren, dadurch gekennzeichnet, dass die Elektrodenstrukturen nach einem der Ansprüche 1 bis 6, sowie zwei Endplatten nach einem der Ansprüche 7 oder 8 zusammengefügt werden, wobei je zwei aneinanderstossende, nichtleitende Randpartien (4) dicht, beispielsweise mittels Spiegelschweissen zur Bildung der Zellen (15) verbunden werden, und die Elektrolytlösung beispielsweise über vorhandene Elektrolytöffnungen bzw. Gasexpansionsöffnungen wie ein Ueberdruckventil (12) eingefüllt wird.
